(19) Europäisches Patentamt
European Patent Office
Office européen des brevets

(11) **EP 4 229 360 B1**

(12) **FASCICULE DE BREVET EUROPEEN**

(45) Date de publication et mention de la délivrance du brevet:
**15.04.2026 Bulletin 2026/16**

(21) Numéro de dépôt: **21790218.8**

(22) Date de dépôt: **14.10.2021**

(51) Classification Internationale des Brevets (IPC):
***G01C 21/30*** *(2006.01)* ***G01C 21/00*** *(2006.01)*

(52) Classification Coopérative des Brevets (CPC):
**G01C 21/30; G01C 21/3811; G01C 21/3822; G01C 21/3841; G01C 21/3848**

(86) Numéro de dépôt international:
**PCT/EP2021/078511**

(87) Numéro de publication internationale:
**WO 2022/079196 (21.04.2022 Gazette 2022/16)**

(54) **PROCEDE DE LOCALISATION D´OBJETS ROUTIERS**

VERFAHREN ZUR ORTUNG VON STRASSENOBJEKTEN

METHOD FOR LOCATING ROAD OBJECTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.10.2020 FR 2010529**

(43) Date de publication de la demande:
**23.08.2023 Bulletin 2023/34**

(73) Titulaire: **AUMOVIO Germany GmbH**
**60488 Frankfurt am Main (DE)**

(72) Inventeur: **BERNARDIN, Matthieu**
**31100 TOULOUSE (FR)**

(74) Mandataire: **Aumovio Corporation**
**AUMOVIO Germany GmbH**
**Taunusstraße 36**
**80807 München (DE)**

(56) Documents cités:
**EP-A1- 3 333 803     EP-A1- 3 637 371**
**US-A1- 2019 003 847     US-A1- 2020 300 637**

## Description

Domaine technique

L'invention concerne le domaine de la cartographie haute résolution d'infrastructures routières, et vise en particulier un procédé et un dispositif permettant de déterminer avec précision la localisation d'objets routiers identifiés par des véhicules au cours de leur circulation sur un réseau routier.

Art antérieur

Pour réaliser une cartographie haute définition, il est courant dans l'industrie d'équiper des véhicules avec différents capteurs adaptés pour collecter des données au cours de la circulation des véhicules. Du fait de l'imprécision des capteurs utilisés, et/ou de la vitesse de déplacement élevée des véhicules, on observe souvent un décalage entre la localisation d'un élément d'infrastructure déterminé par un véhicule et sa position réelle. Ainsi, avant de pouvoir exploiter ces données, il est nécessaire de leur appliquer un traitement visant à corriger les décalages observés. Pour cela, on utilise classiquement des points de repères dont la localisation absolue est connue : ces points de repère, lorsqu'ils sont détectés par un véhicule, permettent d'estimer l'erreur introduite par les capteurs et de déterminer un paramètre de correction permettant de recaler les données collectées. Cette technique présente toutefois des limites. En particulier, seules les données transmises par des véhicules ayant croisé et détecté un point de référence peuvent être corrigées. Or, la création manuelle de points de référence étant coûteuse, ils couvrent une très faible partie du réseau routier. En outre, les points de référence peuvent avoir une durée de vie limitée : par exemple un panneau dont la position est connue peut être déplacé ou supprimé.

Il existe donc un besoin pour une méthode permettant de recaler des données transmises par un véhicule au cours d'une session de conduite lorsqu'aucun point de référence n'est détecté par le véhicule au cours de la session.

US2020300637 A1 divulgue un procédé de navigation et cartographie collaborative.

Résumé de l'invention

A cet effet, il est proposé un procédé de localisation d'objets routiers à partir d'une pluralité de traces transmises par au moins un véhicule circulant sur un réseau routier, une trace transmise par un véhicule comprenant:

- Une pluralité de localisations successives du véhicule acquises au cours d'une session de conduite,
- Au moins un objet routier particulier détecté au cours de la session de conduite par un capteur du véhicule, associé à une localisation du véhicule au moment de sa détection,

Le procédé comprenant les étapes suivantes

- Initialisation d'une liste d'objets routiers de calibration dans laquelle un objet routier particulier est associé à une localisation, avec au moins un objet routier dont la localisation réelle est connue,
- Sélection des traces comprenant au moins un objet routier référencé dans la liste d'objets routiers de calibration, et

Pour chaque trace sélectionnée,

- Calcul d'au moins un paramètre de recalage représentatif d'un écart entre une localisation associée à un objet dans la trace, et une localisation associée audit objet dans la liste de calibration,
- Application du paramètre de recalage calculé aux objets compris dans la trace pour obtenir une trace calibrée, et
- Mise à jour la liste d'objets de calibration avec les localisations d'objets routiers compris dans la trace recalée,

Les étapes de sélection, de calcul, d'application et de mise à jour étant répétées tant qu'au moins un paramètre de recalage calculé est supérieur à un seuil particulier.

Ainsi, lorsqu'un objet routier de référence, c'est-à-dire un objet routier dont la position réelle est connue, est détecté par un véhicule au cours de sa circulation sur un réseau routier, la différence entre la localisation réelle de l'objet routier et la localisation de cet objet déterminée par le véhicule est utilisée pour corriger la position d'autres objets routiers détectés par ce véhicule lors de sa circulation. Les objets routiers dont la localisation est ainsi corrigée peuvent alors être ajoutés à une liste d'objets de calibration utilisés comme référence pour ajuster la position d'objets routiers détectés par un autre véhicule ayant détecté l'un de ces objets routiers.

De cette façon, il est possible d'améliorer la précision de la localisation d'objets routiers détectés par des véhicules n'ayant pas croisé d'objets routiers de référence, c'est-à-dire dont la position réelle est connue.

On entend par objet routier un élément d'infrastructure routière tel qu'un panneau, un feu tricolore, un rond-point, un pont, un tunnel ou encore un élément identifiable dans l'environnement, comme un bâtiment, du mobilier urbain ou encore un arbre.

Au sens de l'invention, un objet routier de référence est un objet routier dont la localisation réelle est connue. Cette localisation peut être déterminée manuellement par un opérateur, à partir de dispositifs de localisation particulièrement précis.

On entend par objet routier de calibration un objet routier pour lequel une localisation fiabilisée est disponible, soit parce que la localisation réelle de l'objet est connue, soit parce que la localisation de l'objet a été corrigée par application d'un paramètre de recalage selon les étapes de sélection, de calcul, d'application et de mise à jour du procédé de localisation. Les objets routiers de calibration permettent d'apprécier un écart entre la position d'un objet détecté par un véhicule et une position fiabilisée de cet objet.

Selon l'invention, une trace recalée est une trace dans laquelle la localisation des objets détectés sont corrigées par application d'un paramètre de recalage, ou dans laquelle les instants d'échantillonnage des positions successives du véhicule sont modifiés par ajout ou suppression d'une valeur de correction. Par exemple, le temps de traitement d'une image acquise par une caméra embarquée en vue de détecter un objet routier ou la latence d'un capteur d'un véhicule peut introduire un décalage entre la position du véhicule donnée par un récepteur GNSS et de la détection effective de l'objet : au moment où l'objet est considéré détecté, le véhicule peut avoir déjà dépassé l'objet, notamment s'il se déplace à haute vitesse. En estimant ce décalage et en l'appliquant aux données de la trace, on obtient une trace recalée dans laquelle les localisations correspondent mieux à la localisation réelle des objets.

Selon un mode particulier de réalisation, l'étape de calcul d'un paramètre de recalage comprend :

- Le calcul d'un premier écart entre une localisation associée à premier un objet dans la trace, et une localisation associée audit premier objet dans la liste de calibration, et
- Le calcul d'au moins un deuxième écart entre une localisation associée à deuxième un objet dans la trace, et une localisation associée audit deuxième objet dans la liste de calibration.

Ainsi, lorsqu'un véhicule croise au moins deux objets routiers présent dans la liste de calibration pour lesquels une localisation fiabilisée est disponible, soit parce que la localisation réelle de l'objet est connue, soit parce que la localisation de l'objet a été corrigée par application d'un paramètre de recalage selon les étapes de sélection, de calcul, d'application et de mise à jour du procédé de localisation, il est proposé de calculer un paramètre de recalage qui tienne compte des écarts de localisation calculés pour ces deux objets. Par exemple, la paramètre de recalage peut être calculé à partir de l'écart calculé le plus faible ou d'une moyenne des écarts.

Selon un mode de réalisation particulier, les premiers et deuxièmes écarts calculés sont pondérés par des indices de confiance respectivement associés aux localisations des premiers et deuxièmes objets de calibration, un indice de confiance étant inversement proportionnel au nombre d'itérations des étapes de sélection, de calcul, d'application et de mise à jour ayant précédé la mise à jour de l'objet de calibration correspondant dans la liste.

Il est ainsi proposé d'associer un indice de confiance aux objets routiers de calibration lorsqu'ils sont ajoutés à la liste de calibration. Par exemple, un objet routier dont la position réelle est connue est associé à un indice de confiance élevé, alors qu'un indice de confiance associé à un objet de calibration dont la position corrigée est obtenue après une ou plusieurs itérations des étapes du procédé est moindre. En effet, un objet de calibration obtenu par recalage d'une trace est moins fiable qu'un objet de calibration obtenu à partir d'une position réelle de l'objet. Ainsi, la fiabilité de la localisation décroît avec le nombre d'itérations des étapes du procédé.

Selon une réalisation particulière, l'étape de calcul d'un paramètre de recalage comprend le calcul d'une moyenne d'un premier écart entre une localisation associée à premier un objet dans la trace et une localisation associée audit premier objet dans la liste de calibration, et d'un deuxième écart entre une localisation associée à deuxième un objet dans la trace, et une localisation associée audit deuxième objet dans la liste de calibration.

De cette façon, lorsqu'un véhicule croise plusieurs objets routiers pour lesquels une localisation fiabilisée est disponible, la trace est recalée à partir de l'écart moyen constaté. Une telle disposition permet d'obtenir des localisations d'objets routiers avec une précision accrue tenant compte d'éventuelles variations du décalage au cours de la session.

Dans un mode de réalisation préféré, l'étape de calcul d'un paramètre de recalage comprend le calcul d'une moyenne d'un premier écart entre une localisation associée à premier un objet dans la trace et une localisation associée audit premier objet dans la liste de calibration, et d'un deuxième écart entre une localisation associée à deuxième un objet dans la trace, et une localisation associée audit deuxième objet dans la liste de calibration, la moyenne calculée étant une moyenne pondérée par les indices de confiance respectivement associés au premier et au deuxième objets de calibration.

De cette façon, les écarts constatés avec les objets routiers de calibration les plus fiables contribuent davantage au recalage d'une trace. La précision des localisations d'objets routiers est améliorée.

Selon un mode particulier de réalisation, le procédé est tel que lorsqu'une trace comprend au moins un premier et un deuxième objet de calibration pour lesquels un premier et un deuxième paramètre de recalage est respectivement calculé, un troisième paramètre de recalage est estimé pour un objet routier situé temporellement dans la trace entre le premier et le deuxième objet de calibration, l'estimation étant réalisée par une régression à partir des paramètres de recalage calculés pour le premier et le deuxième objet de calibration et l'instant de détection respectif des premier, deuxième et troisième objets.

Une telle disposition permet de ne pas appliquer un recalage uniforme à la trace, mais au contraire d'adapter finement le recalage à différents objets routiers détectés par un véhicule, notamment lorsque le décalage entre la position des objets détectée par le véhicule et leurs positions réelle est variable au cours du temps, par exemple lorsque le décalage dépend de la vitesse de déplacement du véhicule.

Dans une réalisation particulière, la régression est pondérée par des indices de confiance associés aux premiers et deuxièmes objets de calibration.

De cette façon, l'écart déterminé entre la localisation d'un objet routier déterminée par un véhicule et sa position réelle est davantage pris en compte pour estimer des écarts intermédiaires lorsque l'objet est associé à un indice de confiance élevé. L'estimation de la localisation des objets intermédiaires est ainsi améliorée.

Selon un autre aspect, l'invention concerne un dispositif de localisation d'objets routiers à partir d'une pluralité de traces transmises par au moins un véhicule circulant sur un réseau routier, une trace transmise par un véhicule comprenant :

- Une pluralité de localisations successives du véhicule acquises au cours d'une session de conduite,
- Au moins un objet routier particulier détecté au cours de la session de conduite par un capteur du véhicule, associé à une localisation du véhicule au moment de sa détection,

Le dispositif comprenant un processeur et une mémoire dans laquelle sont enregistrées des instructions de programme d'ordinateur adaptées pour configurer le processeur pour mettre en œuvre les étapes suivantes :

- Initialisation d'une liste d'objets routiers de calibration dans laquelle un objet routier particulier est associé à une localisation, avec au moins un objet routier dont la localisation réelle est connue,
- Sélection des traces comprenant au moins un objet routier référencé dans la liste d'objets routiers de calibration, et

Pour chaque trace sélectionnée,

- Calcul d'au moins un paramètre de recalage représentatif d'un écart entre une localisation associée à un objet dans la trace, et une localisation associée audit objet dans la liste de calibration,
- Application du paramètre de recalage calculé aux objets compris dans la trace pour obtenir une trace calibrée, et
- Mise à jour la liste d'objets de calibration avec les localisations d'objets routiers compris dans la trace calibrée,

Les étapes de sélection, de calcul, d'application et de mise à jour étant répétées tant qu'au moins un paramètre de recalage calculé est supérieur à un seuil particulier.

L'invention concerne aussi un serveur comprenant un dispositif de localisation tel que décrit précédemment.

Enfin, l'invention concerne un support d'informations lisible par un processeur sur lequel est enregistré un programme d'ordinateur comprenant des instructions pour l'exécution des étapes d'un procédé de localisation d'objets routiers tel que décrit ci-avant.

Le support d'information peut être un support d'information non transitoire tel qu'un disque dur, une mémoire flash, ou un disque optique par exemple.

Le support d'informations peut être n'importe quelle entité ou dispositif capable de stocker des instructions. Par exemple, le support peut comporter un moyen de stockage, tel qu'une ROM, RAM, PROM, EPROM, un CD ROM ou encore un moyen d'enregistrement magnétique, par exemple un disque dur.

D'autre part, le support d'informations peut être un support transmissible tel qu'un signal électrique ou optique, qui peut être acheminé via un câble électrique ou optique, par radio ou par d'autres moyens.

Alternativement, le support d'informations peut être un circuit intégré dans lequel le programme est incorporé, le circuit étant adapté pour exécuter ou pour être utilisé dans l'exécution du procédé en question.

Les différents modes ou caractéristiques de réalisation précités peuvent être ajoutés indépendamment ou en combinaison les uns avec les autres, aux étapes du procédé de localisation d'objets routiers.

Les dispositifs, serveurs et supports d'informations présentent au moins des avantages analogues à ceux conférés par le procédé auquel ils se rapportent.

Brève description des dessins

D'autres caractéristiques, détails et avantages de l'invention apparaîtront à la lecture de la description détaillée ci-après, et à l'analyse des dessins annexés, parmi lesquels :

[Fig. 1a] La figure 1a représente un réseau routier comprenant une pluralité d'objets routiers sur lequel sont matérialisés des trajets effectués par des véhicules,

[Fig. 1b] La figure 1b représente un réseau routier après la calibration d'une première trace,

[Fig. 1c] La figure 1c représente un réseau routier après la calibration d'une deuxième trace,

[Fig. 1d] La figure 1d représente un réseau routier après la calibration d'une troisième trace,

[Fig. 2] La figure 2 est un ordinogramme qui montre les principales étapes d'un procédé de localisation d'objets routiers selon un mode particulier de réalisation,

[Fig. 3] La figure 3 représente une trace comprenant deux objets de calibration détectés.

[Fig. 4a] La figure 4a est une représentation graphique d'une évolution linéaire particulière d'un paramètre de recalage au cours du temps,

[Fig. 4b] La figure 4b est une représentation graphique d'une évolution non-linéaire particulière d'un paramètre de recalage au cours du temps, et

[Fig. 4c] La figure 4c est une représentation graphique d'une autre évolution linéaire particulière d'un paramètre de recalage au cours du temps.

Description détaillée

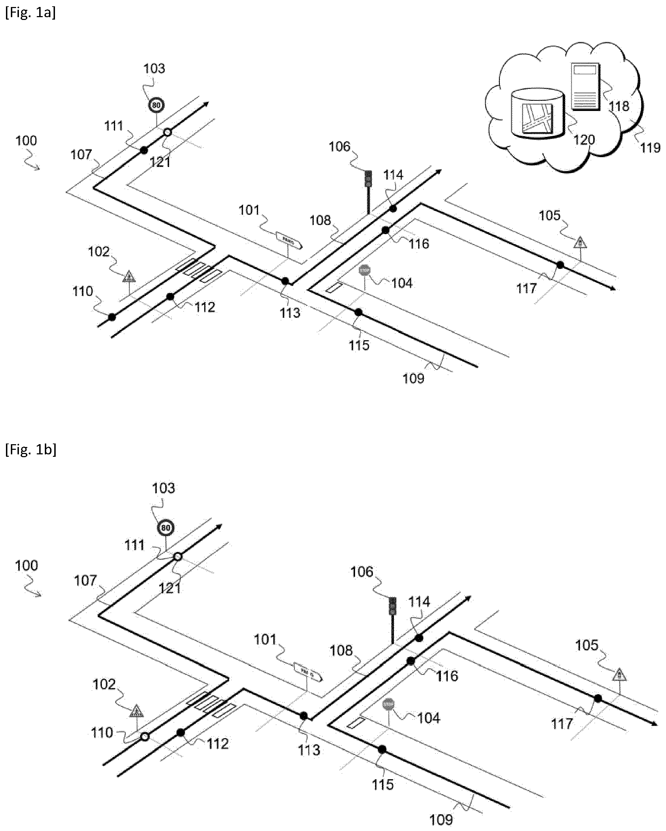

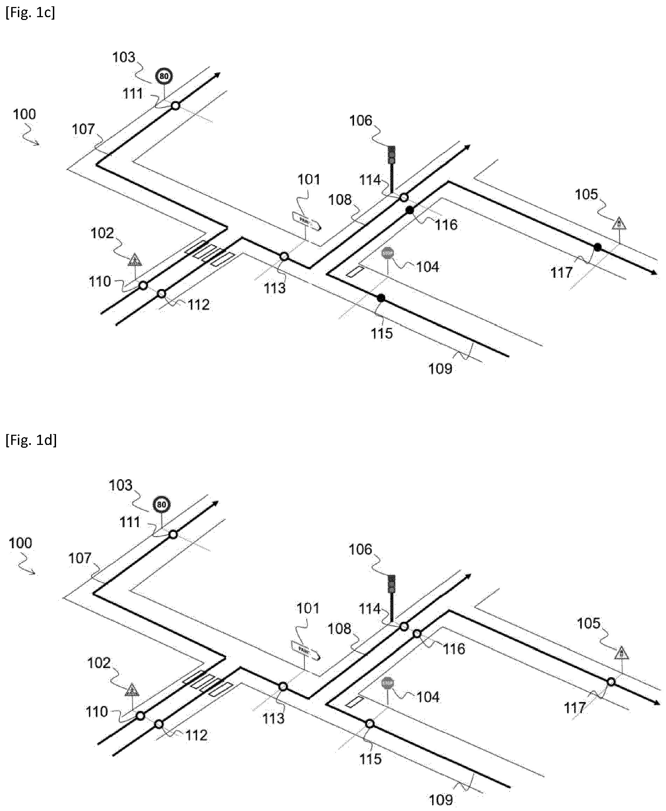

La figure 1 représente schématiquement un réseau routier 100 comprenant une pluralité d'objets routiers, comme des panneaux de signalisation 101 à 105 et un feu tricolore 106.

On a également représenté des trajets 107, 108 et 109 suivis par des véhicules au cours de sessions de conduites distinctes sur le réseau routier 100.

Les trajets 107, 108 et 109 sont obtenus à partir de véhicules de collecte équipés d'un dispositif de localisation, par exemple un récepteur GNSS (Géolocalisation et Navigation par un Système de Satellites). Un véhicule de collecte interroge ainsi régulièrement le récepteur GNSS afin d'obtenir une trace comprenant ses localisations successives, chacune associée à une estampille temporelle. Un véhicule de collecte est en outre équipé d'un ou plusieurs capteurs lui permettant de détecter des objets particuliers dans son environnement au cours de sa circulation, comme une caméra, un lidar et/ou un radar. En analysant des images capturées par une caméra, un véhicule de collecte peut ainsi détecter des objets routiers tels que des éléments d'infrastructure routière (ponts, tunnels, ...) ou des panneaux de signalisation. Pour cela, un véhicule de collecte comprendre une unité de traitement, comme un ECU (Unité de Commande Electronique) mettant en œuvre un algorithme de reconnaissance adapté. Cet algorithme permet notamment de détecter la présence d'un objet routier et d'en définir le type. Ainsi, au cours d'un trajet, un véhicule de collecte génère une trace comprenant une succession de localisations géographique qu'il occupe, chaque localisation étant associée à l'instant auquel elle est obtenue et le cas échéant, à un objet routier détecté à cette localisation. La trace est transmise à un serveur 118 au moyen d'un réseau de communication 119 afin par exemple d'élaborer une cartographie haute définition du réseau routier sur laquelle sont indiqués avec précision les emplacements des objets routiers détectés par les différents véhicules de collecte.

Les emplacements auxquels ont été détectés les objets routiers 101 à 106 par les véhicules de collectes lors de leur circulation sur le réseau 100 sont représentés par des points noirs sur les trajets. Par exemple, concernant le trajet 107, le panneau 102 a été détecté à l'emplacement 110 et le panneau 103 a été détecté à l'emplacement 111. Par souci de lisibilité, le moment où aurait théoriquement dû être détecté ces panneaux sur le trajet est indiqué sur la figure par un trait en pointillé perpendiculaire à la chaussée et issu du panneau correspondant. On constate que dans ces exemples, l'instant auquel un objet est détecté ne correspond pas au moment où le véhicule est au plus près de cet objet, ce qui a pour conséquence un mauvais positionnement des panneaux 102 et 103 dans trace 107. Une telle erreur de positionnement est par exemple due au fait que les différents capteurs du véhicule ne sont pas synchronisés et possèdent tous leur propre horloge et leur fréquence de fonctionnement (la fréquence d'obtention d'une localisation par un récepteur GNSS est moins élevée que la fréquence de capture des images d'une caméra par exemple). Ainsi, il peut y avoir un décalage entre l'instant de capture d'une image à partir d'une caméra et l'obtention d'une localisation GNSS. Ce décalage provoque une erreur d'autant plus importante que la vitesse de déplacement du véhicule est grande.

Revenant à la figure 1, on constate que les traces 108 et 109 comportent également des décalages : dans la trace 108, les objets 102, 101 et 106 sont respectivement localisés aux emplacements 112, 113 et 114, donc avec un retard par rapport à l'emplacement où ils auraient théoriquement dû être localisés, alors que dans la trace 109 les objets 104, 106 et 105 sont localisés respectivement aux emplacements 115, 116 et 117, soit avant leur emplacement réel.

On notera que dans la présente description, la localisation d'un objet routier déterminée par un véhicule se comprend comme l'emplacement du véhicule lorsque celui-ci est au plus près de l'objet routier.

Le serveur 118 de la figure 1 est par exemple un serveur informatique connecté à un réseau de communication 119 et adapté pour traiter les données transmises par les véhicules de collecte via le réseau de communication 119. Pour cela, le serveur 118 comprend une unité de traitement, par exemple un ou plusieurs processeurs, et une mémoire. Le serveur est en outre connecté à une base de données 120 dans laquelle sont mémorisées des localisations d'objets routiers dits de référence dont la localisation réelle est connue. Un enregistrement de la base de données 120 comprend par exemple une signature d'un objet routier de référence particulier et ses coordonnées géographiques.

La signature d'un objet routier particulier est par exemple calculée à partir d'une image ou de caractéristiques extraites d'un signal issu d'un capteur, par exemple, une caractéristique obtenue par analyse d'une image de caméra, d'un écho radar ou Lidar. La signature peut comprendre en outre une zone géographique dans laquelle est située l'objet, par exemple un géohash. D'une manière générale, une telle signature peut être calculée par un véhicule en circulation à partir d'une image capturée par une caméra, et est calculée de façon que pour un même objet routier, les signatures calculées par différents véhicules soient identiques.

Parmi les objets routiers de la figure 1, le panneau 103 est un objet routier de référence dont la localisation réelle est connue et mémorisée dans la base de données 120.

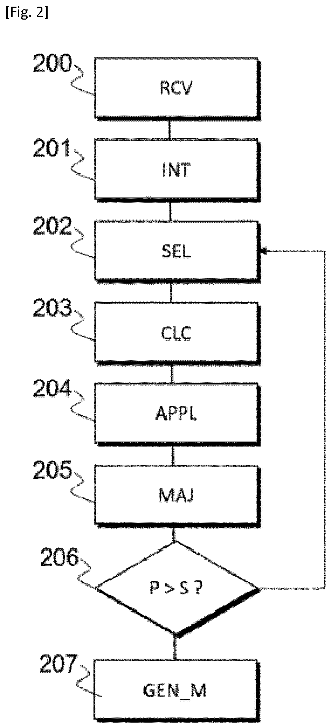

Les étapes du procédé de localisation vont maintenant être décrites en relation avec la figure 2 selon une réalisation particulière.

Lors d'une première étape 200, le serveur 118 reçoit une pluralité de traces transmises par au moins un véhicule de collecte. Les traces sont par exemple transmises sous la forme d'un fichier au format JSON, XML, ou dans tout autre format adapté, par l'intermédiaire d'un réseau d'accès cellulaire 2G, 3G, 4G, 5G, WiFi ou Wimax auquel le véhicule est connecté ou par l'intermédiaire d'un support de stockage amovible.

Les traces reçues par le serveur 118 sont mémorisées dans une base de données, par exemple la base de données 120 ou dans un système de fichier en attendant leur traitement par le serveur 118. Dans l'exemple de la figure 1, les traces 107, 108 et 108 sont reçues par le serveur et mémorisées dans une base de données, par exemple la base de données 120.

Au cours d'une étape 201, on initialise une liste d'objets routiers de calibration. Cette liste est par exemple mémorisée dans la base de données 120 et permet au serveur 118 d'obtenir une localisation fiabilisée d'un objet routier particulier à partir de sa signature. Pour cela, le serveur transmet par exemple vers la base de données 120 une requête SQL adaptée pour sélectionner les enregistrements correspondant à une signature d'objet routier particulière afin d'obtenir en retour, si la signature correspond à un enregistrement, une localisation dudit objet routier.

La liste d'objets de calibration est ainsi initialisée avec des objets routiers de référence dont la localisation géographique est connue avec précision. Ainsi, en reprenant l'exemple de la figure 1, la base de données de calibration 120 est initialisée avec le seul objet routier dont la localisation réelle est connue, c'est-à-dire le panneau 103.

Lors d'une étape 202, le serveur 118 sélectionne parmi les traces reçues, toutes les traces qui comprennent une signature d'au moins un objet routier compris dans la base de données de calibration. Pour cela, le serveur examine les signatures d'objets routiers détectés dans chacune des traces reçues, et effectue une requête à la base de données 120 pour chaque signature afin de déterminer si le véhicule ayant transmis la trace a détecté un objet routier présent dans la liste d'objets de calibration au cours de la session de conduite.

En variante, les traces sont sélectionnées par le serveur selon un critère géographique, de sorte que seules les traces comprises dans une zone géographique particulière sont sélectionnées, la requête comprenant alors un identifiant de zone géographique tel qu'un géohash sur la base duquel les traces sont sélectionnées.

Ainsi, en référence à la figure 1, le serveur 118 effectue des requêtes à la base de données 120 avec les signatures des objets routiers détectés dans les traces 107, 108 et 109. En l'espèce, pour la trace 107, le serveur effectue une recherche avec la signature de l'objet 102 détecté à la position 110 et avec la signature de l'objet 103 détecté à la position 111. La base de données étant initialisée avec l'objet de référence 103, seule la signature de l'objet 103 détectée à la position 111 permet d'obtenir une réponse. La trace 107 est alors sélectionnée. Les autres traces 108 et 109 ne comportant pas d'objet routiers détectés dont la signature figure dans la base de données 120 ne sont pas sélectionnées à ce stade.

Le serveur 118 calcule, à l'étape 203, au moins un paramètre de recalage représentatif d'un écart entre une localisation associée l'objet 103 dans la trace sélectionnée 107, c'est-à-dire la position 111, et la localisation associée à l'objet 103 dans la base de données de calibration 120. Pour cela, le serveur 118 détermine une localisation 121 correspondant à la position du véhicule lorsqu'il était au plus près de la position réelle du panneau 103 obtenue de la base de données 120 et calcule une valeur d'un paramètre de recalage $P_{r1}$ qui est représentative d'un écart entre la position 111 à laquelle le véhicule a situé l'objet 103 et la position 121 où le véhicule aurait théoriquement dû localiser le panneau 103. Cet écart est par exemple une distance ou un intervalle de temps séparant les positions 121 et 111.

Le paramètre de recalage ainsi calculé est ensuite appliqué, lors d'une étape de calibration 204, aux autres objets détectés dans la trace 107. Pour cela, le serveur 118 applique le paramètre $P_{r1}$ à la position 110 afin de corriger les erreurs de positionnement.

La position de l'objet routier 102 ainsi corrigée étant maintenant plus fiable, l'objet est ajouté à la base de données de calibration 120 lors d'une étape 205. La figure 1b représente le réseau routier de la figure 1 sur lequel la trace 107 a été calibrée : les positions de détection 110 et 111 des objets routiers respectifs 102 et 103 sont mises à jour et matérialisées par des points blancs indiquant qu'ils sont maintenant des objets de calibration.

Lorsqu'au moins un nouvel objet de calibration est ajouté la liste de calibration, ou bien lorsque le paramètre de recalage calculé pour une des traces à l'étape 203 est supérieur à un seul déterminé, les étapes 202 à 205 sont répétées. Par exemple, lorsqu'au moins une des traces sélectionnées est calibrée avec un paramètre de recalage impliquant un repositionnement des objets d'au moins 30 mètres ou d'au moins une seconde, les étapes 202 à 205 sont répétées. Dans une réalisation particulière, un nombre maximal d'itération est configuré de manière à garantir un arrêt de l'algorithme. Le nombre maximal d'itération autorisé peut être prédéterminé ou être proportionnel au nombre de traces sélectionnées à l'étape 202. Ainsi, le procédé comprend une étape 206 au cours de laquelle une condition d'arrêt est testée, la condition d'arrêt pouvant être la stabilisation d'un paramètre de recalage d'une itération à l'autre, ou encore l'atteinte d'un nombre d'itération maximal.

En l'espèce, un nouvel objet ayant été ajouté à la liste de calibration, le serveur 118 répète les étapes 202 à 205 en utilisant les nouveaux objets de calibrations 102 et 106 ajoutés dans la base de données 120 pour sélectionner les traces.

Les traces 107 et 108 sont sélectionnées lors de l'étape 202 au cours de cette deuxième itération car elles comprennent des signatures d'objets routiers 102 et 103 référencés dans la base de données de calibration. A l'étape 203, le serveur calcule un paramètre de recalage Pr2 pour la trace 108 à partir de l'écart entre une localisation 112 à laquelle est positionné l'objet 102 dans la trace, et la localisation 110 corrigée associée du même objet 102 ajouté à la liste de calibration lors de l'itération précédente. Le paramètre de recalage $P_{r2}$ ainsi calculé permet corriger le positionnement des objets 101 et 106 détectés aux positions 113 et 114 dans la trace 108 afin d'obtenir une trace calibrée à l'étape 204. Les objets 101 et 106 dont la localisation est corrigée par application du paramètre de recalage $P_{r2}$ sont alors ajoutés à la liste d'objets routiers de calibration.

Deux nouveaux objets ayant été ajoutés à la liste de calibration, le serveur exécute une nouvelle fois les étapes 202 à 205 du procédé. Au cours de cette troisième itération, la trace 109 est sélectionnée car elle comprend une référence à l'objet 106 maintenant présent dans la base de données d'objets routiers de calibration 120. Un paramètre de recalage $P_{r3}$ est calculé à partir d'un écart entre la position 11 de l'objet 106 détecté dans la trace 109 et la position corrigée de cet objet ajoutée à la base de données de calibration 120 et appliqué à la trace 109 pour recaler les objets 104 et 105. Les objets 104 et 105 sont à leur tour ajoutés à la base de données de calibration, en association avec leur position corrigée par application du paramètre de recalage $P_{R3}$.

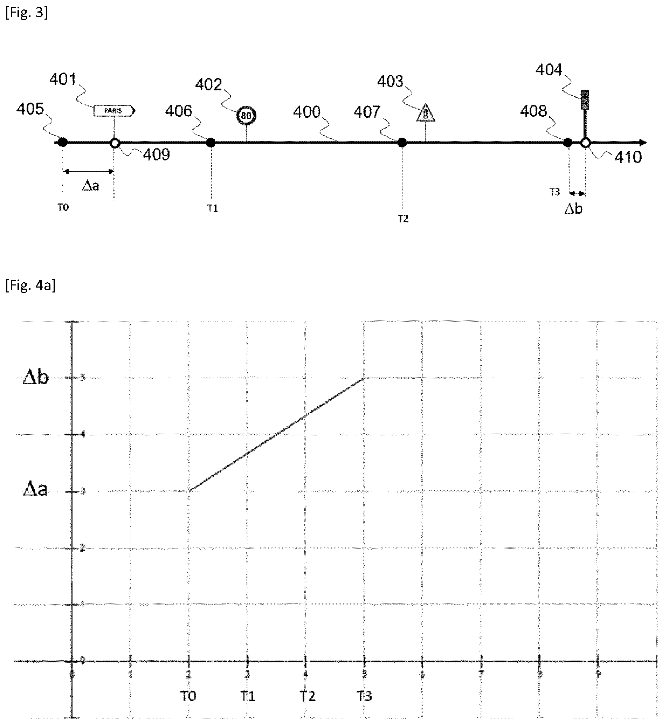

De cette façon, la localisation des objets routiers détectés par des véhicules au cours de leur circulation est fiabilisée même lorsque le véhicule n'a croisé aucun objet de référence. La figure 3 montre le réseau routier 100 sur lequel sont représentées les traces 107, 108 et 109 recalées par la mise en œuvre des trois itérations décrites ci-dessus. La localisation des objets routiers détectés est améliorée. Ces objets peuvent être utilisés pour générer une carte haute résolution du réseau routiers.

La figure 3 représente une trace 400 transmise par un véhicule au cours d'une session de conduite. Lors de cette session de conduite, le véhicule à respectivement détecté les objets routiers 401, 402, 403 et 404 aux instants 405, 406, 407 et 408. Les objets routiers 401 et 404 sont des objets routiers de calibration qui ont été ajoutés à une liste d'objet de calibration, soit parce que leur localisation réelle est connue, soit parce qu'ils ont été recalés à partir de données transmises par d'autres véhicules selon les étapes décrites ci-avant. Les données de localisation associées à l'objet routier 401 dans la liste de calibration indiquent que le panneau 401 aurait dû être détecté à l'instant 409 et les données de localisation associées à l'objet routier 404 dans la liste de calibration indiquent que l'objet 404 aurait dû être détecté à l'instant 410. Ainsi, les deux objets 401 et 404 sont disponibles pour calibrer la trace 400.

Selon une réalisation particulière, pour calculer un paramètre de recalage à l'étape 203, le serveur 118 calcule un premier un écart Δa entre la position de l'objet 401 indiquée dans la trace 400, et la position du même objet 401 telle qu'indiquée dans la lise de calibration.

Le serveur 118 calcule également un deuxième écart Δb entre la position de l'objet 404 indiquée dans la trace 400 et la localisation du même objet 404 dans la liste de calibration.

Selon un mode particulier de réalisation, le paramètre de recalage est un écart moyen calculé par une moyenne du premier écart Δa et du deuxième écart Δb. Cet écart moyen est ensuite appliqué à la trace 400 pour corriger les positions respectives 406 et 407 des objets routiers 402 et 403 pour obtenir une trace calibrée à l'étape 204.

Selon une réalisation particulière, un objet routier de la liste de calibration est associé à un indice de confiance. Une valeur de confiance maximale est associée à un objet routier de référence, c'est-à-dire un objet routier de calibration dont la localisation réelle est connue et disponible dans la liste de calibration. Un objet routier ajouté a la liste de calibration à la suite d'un recalage est associé à un indice de confiance moindre. Par exemple, en référence à la figure 1a, l'objet routier 103 est associé à un indice de confiance maximale dans la liste de calibration, par exemple un indice de valeur 0. L'objet de calibration 102, ajouté à la liste de calibration à la suite du recalage de la trace 107, est associé à un indice de confiance moindre, par exemple un indice de valeur 1. Le panneau 101 a été ajouté à la liste de calibration au cours d'une deuxième itération au cours de laquelle la trace 108 a été calibrée à partir de la trace 107. Ainsi, un indice de confiance de valeur 2 peut être associé à cet objet routier dans la base de données de calibration. Ainsi, la confiance associée à un objet routier de calibration est inversement proportionnelle au nombre d'itération des étapes du procédé ayant précédé l'ajout de l'objet dans la liste de calibration.

Dans cet exemple, on a choisi de faire évoluer la valeur de l'indice de confiance de façon inversement proportionnelle à la précision de localisation de l'objet associé, c'est-à-dire que la valeur d'un indice est d'autant plus importante que la précision décroît. Toutefois, il est tout à fait envisageable de faire décroître la valeur de l'indice proportionnellement au nombre d'itération sans modifier l'invention. Dans un mode particulier de réalisation, l'indice de confiance associé à l'objet routier 401 et l'indice de confiance associé à l'objet routier 404 de la figure 3 sont utilisés pour calculer un paramètre de recalage, le paramètre de recalage correspondant à une moyenne du premier écart Δa et du deuxième écart Δb pondérée par les indices de confiances respectifs des objets 401 et 404.

Selon un autre mode de réalisation particulier, lorsque plusieurs objets de calibration sont disponibles dans la liste de calibration pour calibrer une trace particulière, seul l'objet routier de calibration associé à l'indice de confiance le plus élevé est pris en compte pour calculer le paramètre de recalage.

Selon un mode particulier de réalisation, lorsqu'une trace 400 comprend au moins un premier objet de calibration 401 et un deuxième objet de calibration 404 pour lesquels un premier écart Δa et un deuxième écart Δb sont respectivement calculés, on estime un paramètre de recalage distinct pour chacun des objets routiers 402 et 403 situés temporellement dans la trace entre le premier objet 401 et le deuxième objet de calibration 404, l'estimation étant réalisée par une régression à partir des écarts Δa et Δb respectivement calculés pour le premier objet de calibration 401 et le deuxième objet de calibration 404, et l'instant de détection respectif des premier, deuxième et troisième objets. Ainsi par exemple, si les objets de calibration 401 et 404 ont respectivement été détectés à des instants T0 et T3, alors un paramètre de recalage estimé pour l'objet 402 détecté à l'instant T1 est donné par une fonction affine.

Ainsi, on estime un paramètre de recalage à l'instant T1 de détection de l'objet 402 par :

$$f(T1) = a.T1 + b$$

Et pour l'objet 403 :

$$f(T2) = a.T2 + b$$

Avec :

$$a = \frac{\Delta b - \Delta a}{T3 - T0}$$

Et :

$$b = \frac{T3.\Delta a - T0.\Delta b}{T3 - T0}$$

La figure 4a est une représentation graphique de l'évolution de l'écart (en ordonnée) entre une position d'un objet déterminée par le véhicule et sa position réelle au cours du temps (en abscisse). Ainsi, en connaissant l'écart entre la localisation réelle de l'objet de calibration 401 et sa position détectée par le véhicule à l'instant T0 et l'écart entre la localisation réelle de l'objet 404 et sa position détectée par le véhicule à l'instant T3 de détection par le véhicule, on détermine par une fonction linéaire un paramètre de correction particulier à appliquer lors de la détection des objets 402 et 403 par le véhicule.

Selon une réalisation particulière, les écarts Δa et Δb sont pondérés par des indices de confiance respectivement associés aux objets routiers 401 et 404 pour estimer les paramètres de recalage à appliquer aux objets 402 et 403 de la trace.

$$f(Tn) = a.(d.Tn + e)^b + c$$

Avec :

a : la différence entre l'écart déterminé à l'instant T0 et l'écart déterminé à l'instant T3,

b : le rapport entre l'indice de confiance associé à l'objet 401 et l'indice de confiance associé à l'objet 404.

c : l'écart constaté entre la position réelle de l'objet 401 et la position détectée par le véhicule à l'instant T0, et

d et e : des facteurs pour ramener les valeurs [T0-T3] dans l'intervalle [0-1]

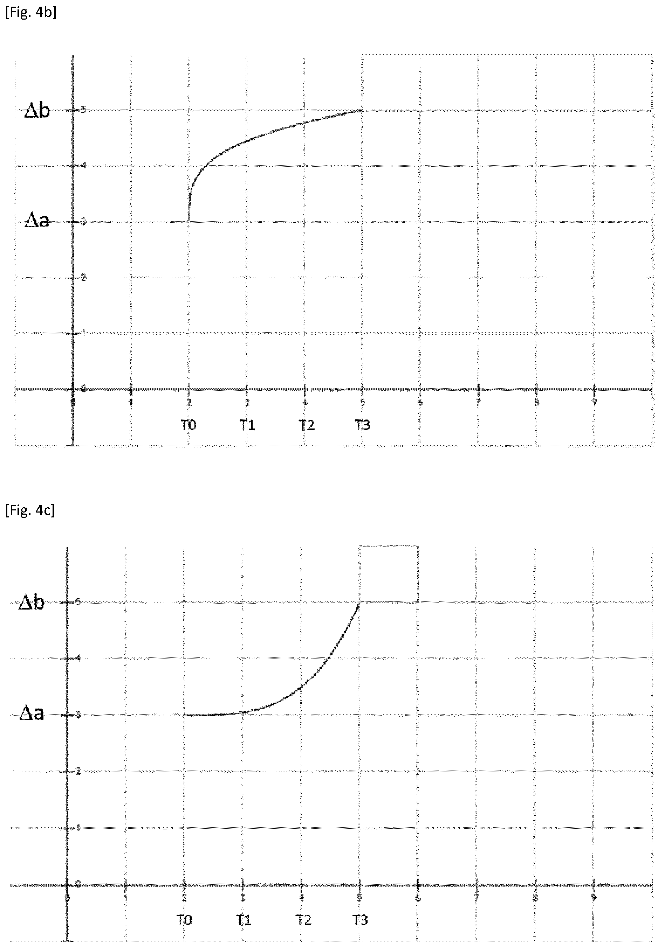

La figure 4b est une représentation graphique de l'évolution de l'écart (en ordonnée) entre une position d'un objet déterminée par le véhicule et sa position réelle au cours du temps (en abscisse). Dans l'exemple de la figure 4b, l'objet routier de calibration 404 est associé à un indice de confiance supérieure à l'indice de confiance associé à l'objet routier de calibration 401. Ainsi, l'écart n'évolue pas linéairement avec le temps.La figure 4c est une autre représentation graphique de l'évolution de l'écart (en ordonnée) entre une position d'un objet déterminée par le véhicule et sa position réelle au cours du temps (en abscisse) dans laquelle l'objet routier de calibration détecté à l'instant T0 est associé à un indice de confiance supérieur à l'indice de confiance associé à l'objet routier de calibration détecté à l'instant T3.

Lorsque la condition d'arrêt est vérifiée à l'étape 206, les localisations d'objets corrigées par recalage des traces au cours d'une ou plusieurs itérations des étapes 202 à 205 sont utilisées pour mettre à jour une base de données géospatiale, comme une carte haute définition, au cours d'une étape 207.

Dans une réalisation préférée, les étapes 200 à 207 du procédé décrites ci-avant sont mises en œuvre par des instructions de programme d'ordinateur enregistrées dans une mémoire et adaptées pour configurer un processeur d'un dispositif de façon à mettre en œuvre le procédé lorsque les instructions sont exécutées par le processeur. Par exemple, les instructions sont chargées dans la mémoire du serveur 118 lors de son initialisation, et exécutées par le processeur du serveur 120.

## Revendications

1. Procédé de localisation d'objets routiers à partir d'une pluralité de traces transmises (200) par au moins un véhicule circulant sur un réseau routier, une trace transmise par un véhicule comprenant :

   - Une pluralité de localisations successives du véhicule acquises au cours d'une session de conduite,
   - Au moins un objet routier particulier détecté au cours de la session de conduite par un capteur du véhicule, associé à une localisation du véhicule au moment de sa détection,
   Le procédé comprenant les étapes suivantes

   - Initialisation (201) d'une liste d'objets routiers de calibration dans laquelle un objet routier de calibration particulier est associé à une localisation, avec au moins un objet routier de calibration dont la localisation réelle est connue,
   - Sélection (202) des traces comprenant au moins un objet routier référencé dans la liste d'objets routiers de calibration, et

   Pour chaque trace sélectionnée,

   - Calcul (203) d'au moins un paramètre de recalage représentatif d'un écart entre une localisation associée dans la trace à un objet routier référencé dans la liste d'objets routiers de calibration, et une localisation associée audit objet routier dans la liste d'objets routiers de calibration,
   - Application (204) du paramètre de recalage calculé aux autres objets routiers compris dans la trace pour obtenir une trace calibrée, et
   - Mise à jour (205) de la liste d'objets routiers de calibration par ajout desdits autres objets routiers à ladite liste d'objets routiers de calibration avec les localisations desdits autres objets routiers compris dans la trace calibrée,

   Les étapes de sélection (202), de calcul (203), d'application (204) et de mise à jour (205) étant répétées tant qu'au moins un paramètre de recalage calculé est supérieur à un seuil particulier.

2. Procédé selon la revendication 1 dans lequel l'étape de calcul d'un paramètre de recalage comprend :

   - Le calcul d'un premier écart entre une localisation associée à un premier objet routier dans la trace, et une localisation associée audit premier objet routier dans la liste d'objets routiers de calibration, et
   - Le calcul d'au moins un deuxième écart entre une localisation associée à un deuxième objet routier dans la trace, et une localisation associée audit deuxième objet routier dans la liste d'objets routiers de calibration.

3. Procédé selon la revendication 2 dans lequel les premiers et deuxièmes écarts calculés sont pondérés par des indices de confiance respectivement associés aux localisations des premiers et deuxièmes objets routiers de calibration, un indice de confiance étant inversement proportionnel au nombre d'itérations des étapes de sélection, de calcul, d'application et de mise à jour ayant précédé la mise à jour de l'objet routier de calibration correspondant dans la liste.

4. Procédé selon l'une quelconque des revendications 2 à 3 dans lequel l'étape de calcul d'un paramètre de recalage comprend le calcul d'une moyenne du premier et du deuxième écart.

5. Procédé selon la revendication 4 dans lequel la moyenne calculée est une moyenne pondérée par les indices de confiance respectivement associés au premier et au deuxième objets routiers de calibration.

6. Procédé selon l'une quelconque des revendication précédentes dans lequel lorsqu'une trace comprend au moins un premier et un deuxième objet routier de calibration pour lesquels un premier et un deuxième paramètre de recalage est respectivement calculé, un troisième paramètre de recalage est estimé pour un objet routier situé temporellement dans la trace entre le premier et le deuxième objet routier de calibration, l'estimation étant réalisée par une régression à partir des paramètres de recalage calculés pour le premier et le deuxième objet routiers de calibration et l'instant de détection respectif des premier, deuxième et troisième objets routiers.

7. Procédé selon la revendication 6 dans lequel la régression est pondérée par des indices de confiance associés aux premiers et deuxièmes objets routiers de calibration.

8. Dispositif de localisation d'objets routiers à partir d'une pluralité de traces transmises par au moins un véhicule circulant sur un réseau routier, une trace transmise par un véhicule comprenant :

- Une pluralité de localisations successives du véhicule acquises au cours d'une session de conduite,
- Au moins un objet routier particulier détecté au cours de la session de conduite par un capteur du véhicule, associé à une localisation du véhicule au moment de sa détection,

Le dispositif étant **caractérisé en ce qu'**il comprend un processeur et une mémoire dans laquelle sont enregistrées des instructions de programme d'ordinateur adaptées pour configurer le processeur pour mettre en œuvre les étapes suivantes :

- Initialisation (201) d'une liste d'objets routiers de calibration dans laquelle un objet routier de calibration particulier est associé à une localisation, avec au moins un objet routier de calibration dont la localisation réelle est connue,
- Sélection (202) des traces comprenant au moins un objet routier référencé dans la liste d'objets routiers de calibration, et

Pour chaque trace sélectionnée,

- Calcul (203) d'au moins un paramètre de recalage représentatif d'un écart entre une localisation associée dans la trace à un objet routier référencé dans la liste d'objets routiers de calibration, et une localisation associée audit objet routier dans la liste d'objets routiers de calibration,
- Application (204) du paramètre de recalage calculé aux autres objets routiers compris dans la trace pour obtenir une trace calibrée, et
- Mise à jour (205) de la liste d'objets routiers de calibration avec les localisations desdits autres objets routiers compris dans la trace calibrée,

Les étapes de sélection (202), de calcul (203), d'application (204) et de mise à jour (205) étant répétées tant qu'au moins un paramètre de recalage calculé est supérieur à un seuil particulier.

9. Serveur comprenant un dispositif selon la revendication 8.

10. Support d'informations lisible par un processeur sur lequel est enregistré un programme d'ordinateur comprenant des instructions pour l'exécution des étapes d'un procédé de localisation selon l'une des revendications 1 à 7.

## Patentansprüche

1. Verfahren zur Ortung von Straßenobjekten anhand einer Vielzahl von Spuren (200), die von mindestens einem Fahrzeug, das auf einem Straßennetz unterwegs ist, übertragen werden, wobei eine vom Fahrzeug übertragene Spur Folgendes umfasst:

eine Vielzahl aufeinanderfolgender Fahrzeugpositionen, die während einer Fahrtsitzung erfasst wurden,
mindestens ein bestimmtes Straßenobjekt, das während der Fahrtsitzung von einem Sensor des Fahrzeugs erkannt wurde, verknüpft mit der Fahrzeugposition zum Zeitpunkt seiner Erkennung,
wobei das Verfahren folgende Schritte umfasst:

Initialisierung (201) einer Liste von Kalibrierungs-Straßenobjekten, in der ein bestimmtes Kalibrierungs-Straßenobjekt mit einer Position verknüpft ist, mit mindestens einem Kalibrierungs-Straßenobjekt, dessen tatsächlicher Standort bekannt ist,
Auswahl (202) der Spuren, die mindestens ein in der Liste der Kalibrierungs-Straßenobjekte referenziertes Straßenobjekt enthalten, und Für jede ausgewählte Spur,
Berechnung (203) von mindestens einem Registrierung-Parameter, der eine Abweichung zwischen einer in der Spur mit einem in der Liste der Kalibrierungs-Straßenobjekte referenzierten Straßenobjekt verknüpften Position und einer mit genanntem Straßenobjekt in der Liste der Kalibrierungs-Straßenobjekte verknüpften Position darstellt,
Anwendung (204) des berechneten Registrierung-Parameters auf die weiteren in der Spur enthaltenen Straßenobjekte, um eine kalibrierte Spur zu erhalten, und Aktualisierung (205) der Liste der Kalibrierungs-Straßenobjekte durch Hinzufügen der genannten weiteren Straßenobjekte zur genannten Liste der Kalibrierungs-Straßenobjekte mit den Positionen der genannten weiteren Straßenobjekte, wie sie in der kalibrierten Spur enthalten sind,
wobei die Schritte der Auswahl (202), Berechnung (203), Anwendung (204) und Aktualisierung (205) wiederholt werden, solange mindestens ein berechneter Registrierung-Parameter einen bestimmten Schwellenwert überschreitet.

2. Verfahren nach Anspruch 1, bei dem der Schritt der Berechnung eines Registrierung-Parameters Folgendes umfasst:

die Berechnung einer ersten Abweichung zwischen einer mit einem ersten Straßenobjekt in der Spur verknüpften Position und einer mit genanntem ersten Straßenobjekt in der Liste der Kalibrierungs-Straßenobjekte verknüpften Position, und
die Berechnung von mindestens einer zweiten Abweichung zwischen einer mit einem zweiten Straßenobjekt in der Spur verknüpften Position und einer mit diesem zweiten Straßenobjekt in der Liste der Kalibrierungs-Straßenobjekte verknüpften Position.

3. Verfahren nach Anspruch 2, wobei die berechneten ersten und zweiten Abweichungen mit Vertrauensindizes gewichtet werden, die jeweils den Positionen der ersten und zweiten Kalibrierungs-Straßenobjekte zugeordnet sind, wobei ein Vertrauensindex umgekehrt proportional zur Anzahl der Iterationen der Schritte Auswahl, Berechnung, Anwendung und Aktualisierung ist, die der Aktualisierung des entsprechenden Kalibrierungs-Straßenobjekts in der Liste vorausgegangen sind.

4. Verfahren nach einem der Ansprüche 2 oder 3, wobei der Schritt der Berechnung eines Registrierung-Parameters die Berechnung eines Mittelwerts der ersten und zweiten Abweichung umfasst.

5. Verfahren nach Anspruch 4, wobei der berechnete Mittelwert ein nach den Vertrauensindizes gewichteter Mittelwert ist, die jeweils den ersten und zweiten Kalibrierungs-Straßenobjekten zugeordnet sind.

6. Verfahren nach einem der vorhergehenden Ansprüche, wobei, wenn eine Spur mindestens ein erstes und ein zweites Kalibrierungs-Straßenobjekt umfasst, für die jeweils ein erster und ein zweiter Registrierung-Parameter berechnet wird, ein dritter Registrierung-Parameter für ein Straßenobjekt geschätzt wird, das zeitlich in der Spur zwischen dem ersten und dem zweiten Kalibrierungs-Straßenobjekt liegt, wobei die Schätzung durch eine Regression aus den für das erste und zweite Kalibrierungs-Straßenobjekt berechneten Registrierung-Parametern und den jeweiligen Erfassungszeitpunkten des ersten, zweiten und dritten Straßenobjekts erfolgt.

7. Verfahren nach Anspruch 6, bei dem die Regression mit Vertrauensindizes gewichtet wird, die den ersten und zweiten Kalibrierungs-Straßenobjekten zugeordnet sind.

8. Vorrichtung zur Ortung von Straßenobjekten anhand einer Vielzahl von Spuren, die von mindestens einem Fahrzeug, das auf einem Straßennetz unterwegs ist, übermittelt werden, wobei eine vom Fahrzeug übertragene Spur Folgendes umfasst:

eine Vielzahl aufeinanderfolgender Fahrzeugpositionen, die während einer Fahrtsitzung erfasst wurden,
mindestens ein bestimmtes Straßenobjekt, das während der Fahrtsitzung von einem Sensor des Fahrzeugs erkannt wurde, verknüpft mit der Fahrzeugposition zum Zeitpunkt seiner Erkennung,
wobei die Vorrichtung **dadurch gekennzeichnet ist, dass** sie einen Prozessor und einen Speicher umfasst, in dem Computerprogrammanweisungen gespeichert sind, die den Prozessor so konfigurieren, dass die folgenden Schritte ausgeführt werden:

Initialisierung (201) einer Liste von Kalibrierungs-Straßenobjekten, in der ein bestimmtes Kalibrierungs-Straßenobjekt mit einer Position verknüpft ist, mit mindestens einem Kalibrierungs-Straßenobjekt, dessen tatsächlicher Standort bekannt ist,
Auswahl (202) der Spuren, die mindestens ein in der Liste der Kalibrierungs-Straßenobjekte referenziertes Straßenobjekt enthalten, und Für jede ausgewählte Spur,
Berechnung (203) von mindestens einem Registrierung-Parameter, der eine Abweichung zwischen einer in der Spur mit einem in der Liste der Kalibrierungs-Straßenobjekte referenzierten Straßenobjekt verknüpften Position und einer mit genanntem Straßenobjekt in der Liste der Kalibrierungs-Straßenobjekte verknüpften Position darstellt,
Anwendung (204) des berechneten Registrierung-Parameters auf die weiteren in der Spur enthaltenen Straßenobjekte, um eine kalibrierte Spur zu erhalten, und Aktualisierung (205) der Liste der Kalibrierungs-Straßenobjekte mit den Positionen der genannten weiteren Straßenobjekte, wie sie in der kalibrierten Spur enthalten sind,
wobei die Schritte der Auswahl (202), Berechnung (203), Anwendung (204) und Aktualisierung (205) wiederholt werden, solange mindestens ein berechneter Registrierung-Parameter einen bestimmten Schwellenwert überschreitet.

9. Server, der eine Vorrichtung gemäß Anspruch 8 umfasst.

10. Informationsspeicher, der von einem Prozessor lesbar ist, auf dem ein Computerprogramm gespeichert ist, das Anweisungen zur Ausführung der Schritte eines Ortungsverfahrens gemäß einem der Ansprüche 1 bis 7 enthält.

**Claims**

1. A Method for locating road objects based on a plurality of traces transmitted (200) by at least one vehicle travelling on a road network, a trace transmitted by a vehicle comprising:

   - a plurality of successive locations of the vehicle acquired during a driving session,
   - at least one specific road object detected during the driving session by a vehicle sensor, associated with the location of the vehicle at the time of its detection,
   The method comprises the following steps

     - initialising (201) a list of calibration road objects in which a particular calibration road object is associated with a location, with at least one calibration road object whose actual location is known,
     - selecting (202) traces comprising at least one road object referenced in the calibration road object list, and

   For each trace selected,

     - calculating (203) at least one realignment parameter representative of a deviation between a location associated in the trace with a road object referenced in the calibration road object list, and a location associated with said road object in the calibration road object list,
     - application (204) of the calculated recalibration parameter to the other road objects included in the trace to obtain a calibrated trace, and
     - updating (205) the list of calibration road objects by adding said other road objects to said list of calibration road objects with the locations of said other road objects included in the calibrated trace,

   The selection (202), calculation (203), application (204), and update (205) steps are repeated as long as at least one calculated recalibration parameter exceeds a particular threshold.

2. The method according to claim 1, in which the step of calculating a realignment parameter comprises:

   - calculating an initial deviation between a location associated with a first road object in the trace and a location associated with said first road object in the list of calibration road objects, and
   - calculating at least one second deviation between a location associated with a second road object in the trace and a location associated with said second road object in the calibration road object list.

3. Method according to claim 2, in which the first and second calculated deviations are weighted by confidence indices respectively associated with the locations of the first and second calibration road objects, a confidence index that is inversely proportional to the number of iterations of the selection, calculation, application, and update steps that preceded the update of the corresponding calibration road object in the list.

4. The method according to any of claims 2 to 3, in which the step of calculating a realignment parameter comprises calculating an average of the first and second deviations.

5. The method according to claim 4, in which the calculated average is a weighted average based on the confidence indices associated with the first and second calibration road objects, respectively.

6. The method according to any of the preceding claims, in which when a track comprises at least a first and a second calibration road object for which a first and a second recalibration parameter are calculated respectively, a third recalibration parameter is estimated for a road object located temporally in the trace between the first and second calibration road objects, the estimation being performed by regression based on the recalibration parameters calculated for the first and second road objects used for calibration and the respective detection times of the first, second, and third road objects.

7. The method according to claim 6, in which the regression is weighted by confidence indices associated with the first and second calibration road objects.

8. A device for locating road objects based on a plurality of traces transmitted by at least one vehicle travelling on a road network, a trace transmitted by a vehicle comprising:

   - a plurality of successive locations of the vehicle acquired during a driving session,
   - at least one specific road object detected during the driving session by a vehicle sensor, associated with the location of the vehicle at the time of its detection, The device being **characterised in that** it comprises a processor and a memory in which computer program instructions are stored, adapted to configure the processor to implement the following steps:
   - initialising (201) a list of calibration road objects in which a particular calibration road object is associated with a location, with at least one calibration road object whose actual location is known,
- selecting (202) traces comprising at least one road object referenced in the calibration road object list, and
For each selected trace,

- calculating (203) at least one realignment parameter representative of a deviation between a location associated in the trace with a road object referenced in the calibration road object list, and a location associated with said road object in the calibration road object list,
- applying (204) the calculated recalibration parameter to the other road objects included in the trace to obtain a calibrated trace, and
- updating (205) the list of calibration road objects with the locations of said other road objects included in the calibrated trace,

The selection (202), calculation (203), application (204), and update (205) steps are repeated as long as at least one calculated realignment parameter is greater than a particular threshold.

9. A server comprising a device according to claim 8.

10. A processor-readable information medium on which a computer programme is recorded, comprising instructions for executing the steps of a localisation method according to any one of claims 1 to 7.

[Fig. 1a]

[Fig. 1b]

[Fig. 1c]

[Fig. 1d]

[Fig. 2]

[Fig. 3]

[Fig. 4a]

[Fig. 4b]

[Fig. 4c]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2020300637 A1